Europäisches Patentamt

European Patent Office

Office européen des brevets

(19)

(11) Veröffentlichungsnummer: **0 364 592**
**A1**

(12)
# EUROPÄISCHE PATENTANMELDUNG
## veröffentlicht nach Art. 158 Abs. 3 EPÜ

(21) Anmeldenummer: 89902352.7

(22) Anmeldetag: 14.12.88

(86) Internationale Anmeldenummer:
PCT/SU88/00256

(87) Internationale Veröffentlichungsnummer:
WO 89/10329 (02.11.89 89/26)

(51) Int. Cl.5: **C01B 31/36**

(30) Priorität: 28.04.88 SU 4409571

(43) Veröffentlichungstag der Anmeldung:
25.04.90 Patentblatt 90/17

(84) Benannte Vertragsstaaten:
AT CH DE FR GB IT LI NL SE

(71) Anmelder: **INSTITUT STRUKTURNOI MAKROKINETIKI AKADEMII NAUK SSSR Moskovskaya olb. Chernogolovka, 142432(SU)**

(72) Erfinder: **MERZHANOV, Alexandr Grigorievich ul. Tretya, 3-2 Moskovskaya obl. pos. Chernogolovka, 142432(SU)**
Erfinder: **BOROVINSKAYA, Inna Petrovna ul. Tretya, 3-2 Moskovskaya obl. pos. Chernogolovka, 142432(SU)**
Erfinder: **MAKHONIN, Nikolai Sergeevich Institutsky pr., 8-139 Moskovskaya obl. pos. Chernogolovka, 142432(SU)**
Erfinder: **POPOV, Leonid Sergeevich ul. 13 Parkovaya, 27-1-182 Moscow, 105215(SU)**

(74) Vertreter: **Patentanwälte Zellentin & Partner Zweibrückenstrasse 15 D-8000 München 2(DE)**

(54) **VERFAHREN ZUR HERSTELLUNG VON BETA-SILIZIUMKARBID.**

(57) Die Erfindung bezieht sich auf die anorganische Chemie.

Der Erfindung liegt die Aufgabe zugrunde, eine vereinfachte Technologie der Herstellung von $\beta$-Siliziumkarbid, das mit Stickstoff und Sauerstoff legiert ist, zu entwickeln,

Das Verfahren zur Herstellung von $\beta$-Siliziumkarbid besteht darin, daß man das pulverförmige Silizium und den Kohlenstoff sowie eine Legierungskomponente, die Stickstoff und Sauerstoff enthält, mit einer Temperatur der Zersetzung von 323 bis 423 K, die in einer Menge von 0,5 bis 10,0 Masse% genommen wird, vermischt, auf das hergestellte Gemisch einen Stoff mit einer Wärmeleitfähigkeit $(1-9) \times 10^{-4}$ cal/cm $\cdot$ s $\cdot$ Grad bei einer Dichte des Gemisches von 0,80 bis 1,50 g/cm$^3$ aufträgt, die Wärmebehandlung der genannten Komponenten in einem Gasmedium unter Zuhilfenahme der selbstverbreitenden Hochtemperatur-Synthese unter Druck durchführt und das Endprodukt ausscheidet.

Die Erfindung kann zur Herstellung von Karborundum-, Schleifstoffen sowie von keramischen

und feuerfesten Stoffen eingesetzt werden.

# VERFAHREN ZUR HERSTELLUNG VON β-SILIZIUMKARBID

## Gebiet der Technik

Die Erfindung bezieht sich auf das Gebiet der anorganischen Chemie und insbesondere auf ein Verfahren zur Herstellung von β-Siliziumkarbid.

## Stand der Technik

Als Hauptverfahren zur industriemässigen Herstellung von Siliziumkarbid gilt das von Acheson vorgeschlagene Verfahren, das in der Reduktion der Kieselerde im Kohlenstoffmedium im elektrischen Widerstandsofen bei einer Temperatur von 2073 bis 2273 K besteht. In diesem Verfahren wird bei der Synthese von Siliziumkarbid Strom mit einer Stärke von 10000 A verwendet. Das Fertigprodukt enthält Beimengungen der Ausgangsstoffe, Quarzsand, Kohlenstoff und Natriumchlorid (Siliziumkarbid - Karbid kremniya - 1985, Verlag "Naukova dumka" (Kiev).

Das Verfahren ist kompliziert, es verlangt einen grossen Stromverbrauch und spezielle Ausrüstungen. Außerdem sind in dem hergestellten β-Siliziumkarbid Beimengungen der Ausgangsstoffe vorhanden.

Bekannt ist ein Verfahren zur Herstellung von β-Siliziumkarbid, das das Vermischen pulverartigen Siliziums mit einem Dispersitätsgrad von 0,01 bis 10 $\mu$m (Durchschnittsgrösse der Teilchen beträgt 0,33 $\mu$m) mit Russ in Äthylalkohol bei einem Verhältnis des pulverartigen Siliziums zum Russ gleich 1:1, die Unterbringung des bis zu einer Dichte von 1,2 g/cm$^3$ zusammengepressten Gemisches in einem Quarzrohr und die Induktionserhitzung bis auf 1373 bis 1823 K im Argonmedium bei einer Geschwindigkeit des Argonstromes von 50 1/min bis zum Beginn einer exothermen Reaktion vorsieht.

Dieses Verfahren gestattet es, 38 Vol.% β-Siliziumkarbid mit Beimengungen aus nichtumgesetztem Kohlenstoff und Silizium zu erhalten. Der Nachteil dieses Verfahrens besteht in dem niedrigen Reinheitsgrad des hergestellten β-Siliziumkarbids durch das Vorhandensein von Ausgangssilizium und -kohlenstoff in demselben, in dem grossen Stromverbrauch und in der Kompliziertheit der apparativen Ausstattung. Bekanntlich sintert das mit Stickstoff und Sauerstoff legierte Siliziumkarbid bei niedrigeren Temperaturwerten als nichtlegiertes Siliziumkarbid. Die oben beschriebenen Verfahren gestatten es nicht, β-Siliziumkarbid herzustellen, das mit Stickstoff und Sauerstoff legiert ist.

Bekannte Verfahren zur Herstellung von mit Stickstoff und Sauerstoff legiertem β-Siliziumkarbid sind kompliziert und sehen zwei Stufen vor: Gewinnung von β-Siliziumkarbid und seine anschliessende Legierung.

Bekannt ist ein Verfahren zur Legierung von Siliziumkarbid mit Stickstoff, das die Bestrahlung des polykristallinen reaktionsmässig gebundenen Siliziumkarbids mit Stickstoffionen mit einer Energie von 5 bis 500 MeV unter Bildung einer Schicht aus Siliziumkarbid, das mit Stickstoff legiert ist, vorsieht (GB, A, 2100713).

Das Verfahren ist kompliziert und verlangt spezielle Ausrüstungen.

Bekannt ist ein Verfahren zur Herstellung von β-Siliziumkarbid, das mit Stickstoff und Sauerstoff legiert ist, das die Erhitzung von Siliziumdioxid bis auf eine Temperatur von 1473 bis 1873 K in einem Medium vorsieht, das sich aus einem Gemisch aus Kohlenwasserstoff, Wasserstoff und einem Inertgase als Verdünnungsmittel, beispielsweise Stickstoff, zusammensetzt (US, A, 4327066).

Das beschriebene Verfahren zur Herstellung von β-Siliziumkarbid, das mit Stickstoff und Sauerstoff legiert wird, ist jedoch kompliziert im Hinblick auf die apparative Ausstattung und verlangt einen grossen Stromverbrauch für die Gewährleistung einer Temperatur bis 1873 K.

Das hergestellte β-Siliziumkarbid enthält ausserdem bis zu 2 Vol.% Beimengungen der Ausgangsstoffe.

Bekannt ist ein Verfahren zur Herstellung von β-Siliziumkarbid, das das Vermischen von pulverartigem Silizium mit einem Dispersitätsgrad nicht über 200 μm, in der Regel ~ 77 μm, und einem Reinheitsgrad von 95%, mit Kohlenstoff in Wasser, als Kohlenstoff verwendet man Natur- beziehungsweise Kunstgraphit, Russ und Koks mit einer Teilchengrösse von 0,05 bis 0,1 μm, bei einem Verhältnis des Kohlenstoffs zum Silizium von 1:0,6 bis 1:2, die Unterbringung des hergestellten Gemisches in einer feuerfesten Hülle, die Wärmebehandlung dieses Gemisches innerhalb von 1 bis 5 Stunden bei Temperaturwerten von 1073 bis 1673 K in einem Gasoxydationsmedium, das 0,3 bis 35 Vol.% Sauerstoff enthält, in einem elektrischen Ofen bis zum Beginn einer exothermen Reaktion und dann die Ausscheidung des hergestellten β-Siliziumkarbids vorsieht (US, A, 4117096).

Das in dem genannten Verfahren hergestellte β-Siliziumkarbid weist eine Teilchengrösse von 0,05 bis 5,0 μm auf.

Zum Nachteil dieses Verfahrens gehört der grosse Stromverbrauch infolge der Notwendigkeit, eine Vorerhitzung (bis zu Temperaturwerten von 1073 bis 1673 K) vorzunehmen und die Dauer bis auf 5 Stunden zu erhöhen. Das bekannte Verfahren erlaubt ausserdem nicht, β-Siliziumkarbid herzustellen, das mit Stickstoff und Sauerstoff legiert ist.

## Offenbarung der Erfindung

Der vorliegenden Erfindung liegt die Aufgabe zugrunde, eine vereinfachte Technologie zur Herstellung von β-Siliziumkarbid, das mit Stickstoff und Sauerstoff legiert ist, anzugeben.

Die Aufgabe wird durch ein Verfahren zur Herstellung von $\beta$-Siliziumkarbid mittels Vermischung von pulverartigem Silizium und Kohlenstoff mit anschliessender Wärmebehandlung ihres Gemisches in einem Gasmedium und Ausscheidung des Fertigproduktes dadurch gelöst, daß man in das Gemisch des pulverartigen Siliziums und Kohlenstoffs eine legierende Komponente zusätzlich einführt, die in einer Menge von 0,5 bis 10,0 Masse% genommen wird, Stickstoff und Sauerstoff enthält, und eine Zersetzungstemperatur von 323 bis 423 K/ auf das hergestellte Gemisch einen Stoff mit einer Wärmeleitfähigkeit (1-9) x $10^{-4}$ cal/cm·S·Grad bei einer Dichte des Gemisches von 0,80 bis 1,50 g/cm$^3$ aufträgt und die Umsetzung der genannten Komponenten unter Zuhilfenahme der selbstverbreitenden Hochtemperatur-Synthese unter Druck durchführt.

Vorzugsweise sollen als Legierungskomponente, die Stickstoff und Sauerstoff enthält und eine Zersetzungstemperatur von 323 bis 423 K aufweist, Verbindungen, die aus der Gruppe: $(NH_4)_2CO_3$, $CO(NH_2)_2$, $(NH_4)_2C_2O_4$ gewählt sind, oder ihre Gemische eingesetzt werden.

Als Gasmedium wird empfohlen, Stickstoff oder sein Gemisch mit Kohlenstoffoxid beziehungsweise -dioxid zu verwenden.

Dabei ist wünschenswert, dass das Gemisch des Stickstoffs mit dem Kohlenstoffoxid 20 bis 40 Vol.% Kohlenstoffoxid enthält, und das Gemisch des Stickstoffs mit dem Kohlenstoffdioxid von 20 bis 40 Vol.% Kohlenstoffdioxid enthält.

Es wird empfohlen, als den auf das Gemisch aufzutragenden Stoff mit einer Wärmeleitfähigkeit von (1-9) x $10^{-4}$ cal/cm · S · Grad einen Stoff aus der Gruppe Asbest, Karton, Papier, Glimmer zu verwenden.

Vorzugsweise soll die selbstverbreitende Hochtemperatur-Synthese unter einem Druck von 0,5 bis 10,0 MPa erfolgen.

Es wird empfohlen, pulverartiges Silizium mit Kohlenstoff bei einem Molverhältnis von 1:0,8 bzw. 1:1,2 zu vermischen.

Bei der Einführung einer Stickstoff und Sauerstoff enthaltenden Legierungskomponente mit einer Zersetzungstemperatur von 323 bis 423 K in einer Menge unter 0,5 Masse% oder über 10,0 Masse% sowie bei der Durchführung der selbstverbreitenden Hochtemperatur-Synthese bei Druckwerten über 10,0 MPa oder unter 0,5 MPa verringert sich die Ausbeute an Fertigprodukt infolge der Verunreinigung desselben mit Ausgangskomponenten. Zur Verringerung der Ausbeute an Endprodukt infolge seiner Verunreinigung mit Ausgangskomponenten führt auch die Verwendung einer Stickstoff und Sauerstoff enthaltenden Legierungskomponente mit einer Zersetzungstemperatur von unter 323 beziehungsweise oberhalb von 423 K, sowie die Veränderung der Dichte des in den Stoff eingeführten Gemisches aus pulverartigem Stickstoff, Silizium und dem Legierungszusatzstoff unter 0,80 g/cm$^3$ beziehungsweise über 1,50 g/cm$^3$ als auch die Verwendung eines Stoffes mit einer Wärmeleitfähigkeit oberhalb von $9 \cdot 10^{-4}$ cal/cm·s·Grad oder unterhalb von $1 \cdot 10^{-4}$ cal/cm s cal/cm·s·Grad.

Die Verwendung einer Stickstoff und Sauerstoff enthaltenden Legierungskomponente mit einer Zersetzungstemperatur von 323 bis 423 K aus Verbindungen, die aus der Gruppe: $(NH_4)_2CO_3$, $CO(NH_2)_2$, $(NH_4)_2C_2O_4$ beziehungsweise ihrer Gemische gewählt sind, sowie die Verwendung als Gasmedium von Stickstoff im Gemisch entweder mit Kohlenstoffoxid, oder mit Kohlenstoffdioxid, und insbesondere bei einem Gehalt an Kohlenstoffoxid beziehungsweise -dioxid in diesem Gemisch in einer Menge von 20 bis 40 Vol.% als auch die Durchführung der selbstverbreitenden Hochtemperatur-Synthese unter einem Druck von 0,5 bis 10,0 MPa und das Vermischen des pulverartigen Siliziums und des Kohlenstoffs bei einem Molverhältnis

von 1:0,8 bis 1:1,2 ermöglicht es, eine hohe Ausbeute an Endprodukt zu erzielen.

Die Abweichung von den erfindungsgemäßen Merkmalen in der einen oder in der anderen Richung senkt die Ausbeute an Fertigprodukt infolge dessen Verunreinigung mit nichtumgesetzten Ausgangskomponenten und verlangt seine zusätzliche Reinigung.

Ausführungsvariante der Erfindung

Das Verfahren zur Herstellung von β -Siliziumkarbid wird erfindungsgemäss wie folgt realisiert.

Man vermischt pulverartiges Silizium und pulverartigen Kohlenstoff sowie die Stickstoff und Sauerstoff enthaltende Legierungskomponente mit einer Zersetzungstemperatur von 323 bis 423 K und in einer Menge von 0,5 bis 10,0 Masse%, beispielsweise $(NH_4)_2CO_3$, $(NH_4)C_2O_4$, $CO(NH_2)_2$ beziehungsweise ihr Gemisch.

Dabei verwendet man Silizium mit einem Dispersitätsgrad unter 12 $\mu$m, kristallines, amorphes beziehungsweise ihr Gemisch. Als Kohlenstoff verwendet man, beispielsweise Russ, Graphit und andere kohlenstoffhaltige Stoffe. Es ist dabei wünschenswert, dass das Molverhältnis des Siliziums zum Kohlenstoff von 1:0,8 bis 1:1,2 beträgt.

Auf das hergestellte Gemisch trägt man einen Stoff mit einer Wärmeleitfähigkeit von $(1-9) \times 10^{-4}$ cal/cm • • s • Grad bei der Dichte des Gemisches von 0,80 bis 1,50 g/cm$^3$ auf und man führt die Wärmebehandlung der genannten Komponenten in einem Gasmedium unter Zuhilfenahme der selbstverbreitenden Hochtemperatur-Synthese unter Druck durch.

Dabei wird als ein Stoff mit der Wärmeleitfähigkeit von $(1-9) \times 10^{-4}$ cal/cm • s • Grad, beispielsweise, Asbest, Karton, Papier, Glimmer verwendet.

Als Gasmedium verwendet man Stickstoff, ein Gemisch von Luft mit Argon, beispielsweise mit 10 bis 50 Vol.% Argon, ein Gemisch aus Stickstoff mit Kohlenstoffoxid, das beispielsweise von 20 bis 40 Vol.% Kohlenstoffoxid enthält, ein Gemisch des Stickstoffs mit Kohlenstoffdioxid, das, beispielsweise, von 20 bis 40 Vol.% Kohlenstoffdioxid enthält.

Man iniziiert die selbstverbreitende Hochtemperatur-Synthese durch die Zuleitung eines kurzzeitigen Stromimpulses, beispielsweise, durch eine Spirale, dabei kann die Temperatur der Synthese von 2000 bis 3000 K erreichen. Die Einleitung der Umsetzung der genannten Komponenten kann auch unter Zuhilfenahme eines elektrischen Lichtbogens, elektrischen Funkens, des Licht- beziehungsweise Laserstrahls erfolgen.

Nach der Beendigung der selbstverbreitenden Hochtemperatur-Synthese und der Abkühlung des Reaktors scheidet man das Fertigprodukt aus und analysiert es nach dem Gehalt an Stickstoff, Kohlenstoff und an freiem Sauerstoff.

Das erfindungsgemässe Verfahren zur Herstellung von β-Siliziumkarbid ermöglicht es, das mit Stickstoff und Sauerstoff legierte β-Siliziumkarbid nach einer vereinfachten Technologie herzustellen.

Die spezifische Oberfläche des hergestellten β-Siliziumkarbids kann dabei von 0,5 bis 15,0 $m^2$/g betragen.

Zur besseren Erläuterung der vorliegenden Erfindung werden nachstehende Beispiele ihrer Ausführung angeführt.

Beispiel 1

Das Verfahren zur Herstellung von β-Siliziumkarbid wird wie folgt realisiert.

Man vermischt pulverartiges Silizium mit Teilchen nicht unter 12 $\mu$m bei einem Molverhältnis gleich 1,0:1,0 mit technischem Kohlenstoff und einer Legierungskomponente, Ammoniumkarbonat, das in einer Menge von 0,5 Masse% genommen wird.

Auf das hergestellte Gemisch trägt man Karton ($\lambda$ = 3,3 x $10^{-4}$ cal/cm $\cdot$ s $\cdot$ Grad) bei einer Dichte des Gemisches von 1,1 g/cm$^3$ auf, bringt es in einen Reaktor und führt seine Wärmebehandlung unter Zuhilfenahme der selbstverbreitenden Hochtemperatur- -Synthese unter einem Druck von 0,5 MPa durch, wobei als Gasmedium ein Gemisch aus Luft mit Argon verwendet wird, das 50 Vol.% Argon enthält. Dabei wird diese Synthese durch lokale Entzündung dieser Komponenten mittels Zuführung eines kurzzeitigen Stromimpulses durch eine Spirale iniziiert, die sich im Kontakt mit den erwähnten Komponenten befindet.

Im Gemisch wird die selbstverbreitenden Hochtemperatur-Synthese eingeleitet, die mit einer Geschwindigkeit von 0,5 mm/s bei einer Temperatur bis zu 3000 K verläuft.

Nach der Beendigung der genannten Synthese und Abkühlung des Reaktors scheidet man das Fertigprodukt aus und analysiert es nach dem Gehalt an Stickstoff, Kohlenstoff und freiem Sauerstoff in demselben.

Das hergestellte $\beta$-Siliziumkarbid, das mit Stickstoff und Sauerstoff legiert ist, hat eine spezifische Oberfläche von 7 m$^2$/g.

Die Ergebnisse der chemischen Analyse des hergestellten $\beta$-Siliziumkarbid sind in der nachstehenden Tabelle aufgeführt.

Beispiel 2

Das Verfahren zur Herstellung von $\beta$-Siliziumkarbid erfolgt wie in Beispiel 1, man verwendet aber als Legierungskomponente Karbamid, das man in das Gemisch des Siliziums und des Kohlenstoffs in einer Menge von 5,0 Masse% einführt. Auf das angefallene Gemisch trägt man ausserdem Seidenasbest ($\lambda$ = 3,75 x $10^{-4}$ cal/cm$\cdot$ $\cdot$ s $\cdot$ Grad) bei einer Dichte des Gemisches von 1,2 g/cm$^3$ auf, und die selbstverbreitende Hochtemperatur-Synthese führt man bei einem Druck von 3,0 MPa durch, wobei man als Gasmedium ein Gemisch von Stickstoff mit Kohlenstoffoxid verwendet, das 20 Vol.% Kohlenstoffoxid aufweist.

Das hergestellte $\beta$ -Siliziumkarbid, das mit Stickstoff und Sauerstoff legiert ist, weist eine spezifische Oberfläche von 9 m$^3$/g auf.

Die Ergebnisse der chemischen Analyse des hergestellten $\beta$ -Siliziumkarbids sind in der nachstehenden Tabelle aufgeführt.

Beispiel 3

Das Verfahren zur Herstellung von $\beta$ -Siliziumkarbid erfolgt wie in Beispiel 1, aber bei einem Molverhältnis des Siliziums zum Kohlenstoff gleich 1,0:0,8, dabei verwendet man als Legierungskomponente Ammoniumkarbonat das man in einer Menge von 10 Masse% einführt. Auf das angefallene Gemisch trägt man Papier ( $\lambda$ = 1,4 x 10$^{-4}$ cal/cm • s • Grad), bei einer Dichte des Gemisches von 1,0 g/cm$^3$ auf, und die selbstverbreitende Hochtemperatur-Synthese verläuft unter einem Druck von 7,0 MPa, wobei man als Gasmedium ein Gemisch von Stickstoff mit Kohlenstoffdioxid verwendet, das 30 Vol.% Kohlenstoffdioxid enthält.

Das hergestellte $\beta$ -Siliziumkarbid, das mit Stickstoff und Sauerstoff legiert ist, hat eine spezifische Oberfläche von 15 m$^2$/g.

Die Ergebnisse der chemischen Analyse des hergestellten $\beta$ -Siliziumkarbids sind in der nachstehenden Tabelle angeführt.

Beispiel 4

Das Verfahren zur Herstellung von $\beta$ -Siliziumkarbid erfolgt wie in Beispiel 1, aber bei einem Molverhältnis des Siliziums zum Kohlenstoff gleich 1,0:1,2, dabei verwendet man als Legierungskomponente Ammmoniumoxalat in einer Menge von 2 Masse%. Auf das angefallene Gemisch trägt man Glimmer ( $\lambda$ = 5,7 x 10$^{-4}$ cal/cm•s•Grad), bei einer Dichte des Gemisches von 1,5 g/cm$^3$ auf und führt die /

selbstverbreitende Hochtemperatur-Synthese unter einem Druck von 10,0 MPa durch, wobei man als Gasmedium ein Gemisch aus Luft und Argon verwendet, das 40 Vol.% Luft enthält.

Das hergestellte $\beta$-Siliziumkarbid, das mit Stickstoff und Sauerstoff legiert ist, hat eine spezifische Oberfläche von 10 $m^2$/g.

Die Ergebnisse der chemischen Analyse des hergestellten $\beta$-Siliziumkarbids sind in der nachstehenden Tabelle angeführt.

Beispiel 5

Das Verfahren zur Herstellung von $\beta$-Siliziumkarbid erfolgt wie in Beispiel 1, aber bei einem Molverhältnis des Siliziums zum Kohlenstoff gleich 1,0:1,1, dabei verwendet man als Legierungskomponente Karbamid in einer Menge von 6,1 Masse%. Auf das angefallene Gemisch mit einer Dichte von 0,8 g/$cm^3$ trägt man Asbestkarton ( $\lambda$ = 2,5 x $10^{-4}$ cal/cm · s · Grad) auf, und führt die selbstverbreitende Hochtemperatur-Synthese unter einem Druck von 1,0 MPa durch, wobei man als Gasmedium ein Gemisch aus Stickstoff und Kohlenstoffoxid verwendet, das 40 Vol.% Kohlenstoffoxid enthält.

Das hergestellte $\beta$-Siliziumkarbid, das mit Stickstoff und Sauerstoff legiert ist, hat eine spezifische Oberfläche von 5 $m^2$/g.

Die Ergebnisse der chemischen Analyse des hergestellten $\beta$-Siliziumkarbids sind in der nachstehenden Tabelle angeführt.

Beispiel 6

Das Verfahren zur Herstellung von $\beta$-Siliziumkarbid erfolgt wie in Beispiel 1, aber man verwendet als Legierungskomponente Ammoniumoxalat in einer Menge von 1,0 Masse%. Auf das hergestellte Gemisch trägt man Asbestgewebe ( $\lambda$ = 3,0 x $10^{-4}$ cal/cm · s · Grad) bei einer Dichte des Gemisches von 0,9 g/$cm^3$ auf, und führt die selbstverbreitende Hochtemperatur-Synthese unter einem Druck von 4,0 MPa durch, wobei man als Gasmedium ein Gemisch aus Luft und Argon verwendet, das 90 Vol.% Argon enthält.

Das hergestellte $\beta$ -Siliziumkarbid, das mit Stickstoff und Sauerstoff legiert ist, hat eine spezifische Oberfläche von 6 m$^2$/g.

Die Ergebnisse der chemischen Analyse des hergestellten $\beta$ -Siliziumkarbids sind in der nachstehenden Tabelle angeführt.

Beispiel 7

Das Verfahren zur Herstellung von $\beta$ -Siliziumkarbid erfolgt wie in Beispiel 1, aber bei einem Molverhältnis des Siliziums zum Kohlenstoff gleich 1,0:0,9, dabei verwendet man als Legierungskomponente Ammoniumoxalat in einer Menge von 1,5 Masse% , auf das hergestellte Gemisch wird Seidenasbest ( $\lambda$ = 3,75 x 10$^{-4}$ cal/cm • s • Grad) aufgetragen, und die selbstverbreitende Hochtemperatur-Synthese erfolgt unter einem Druck von 2,5 MPa, wobei als Gasmedium ein Gemisch aus Stickstoff und Kohlenstoffdioxid verwendet wird, das 20 Vol.% Kohlenstoffdioxid enthält.

Das hergestellte $\beta$ -Siliziumkarbid, das mit Stickstoff und Sauerstoff legiert ist, hat eine spezifische Oberfläche von 7 m$^2$/g.

Die Ergebnisse der chemischen Analyse des hergestellten $\beta$ -Siliziumkarbids sind in der nachstehenden Tabelle angeführt.

Beispiel 8

Das Verfahren zur Herstellung von $\beta$ -Siliziumkarbid erfolgt analog Beispiel 1, aber man verwendet als Legierungskomponente Karbamid, auf das hergestellte Gemisch trägt man zusammengepressten Asbest ( $\lambda$ = 9 x 10$^{-4}$ cal/cm • s • Grad) bei einer Dichte des Gemisches von 1,0 g/cm$^3$ auf, und die selbstverbreitende Hochtemperatur-Synthese wird unter einem Druck von 6,0 MPa durchgeführt, wobei man als Gasmedium ein Gemisch aus Stickstoff und Kohlenstoffdioxid verwendet, das 40 Vol.% des Kohlenstoffdioxids enthält.

Das hergestellte $\beta$-Siliziumkarbid, das mit Stickstoff und Sauerstoff legiert ist, hat eine spezifische Oberfläche von 6,5 $m^2$/g.

Die Ergebnisse der chemischen Analyse des hergestellten $\beta$-Siliziumkarbids sind in der nachstehenden Tabelle angeführt.

Beispiel 9

Das Verfahren zur Herstellung von $\beta$-Siliziumkarbid erfolgt analog Beispiel 1, aber man verwendet dabei als Legierungskomponente ein Gemisch aus Karbamid und Ammoniumoxalat, das 85 Masse% Ammoniumoxalat enthält, in einer Menge von 1,1 Masse% . Auf das hergestellte Gemisch wird Seidenasbest ( $\lambda$ = 3,75 x $10^{-4}$ cal/cm • s • Grad) mit einer Dichte des Gemisches von 0,85 g/$cm^3$ aufgetragen, und die selbstverbreitende Hochtemperatur-Synthese erfolgt unter einem Druck von 3,0 MPa, wobei man als Gasmedium Stickstoff verwendet.

Das hergestellte $\beta$-Siliziumkarbid, das mit Stickstoff und Sauerstoff legiert ist, hat eine spezifische Oberfläche von 9 $m^2$/g.

Die Ergebnisse der chemischen Analyse des hergestellten $\beta$-Siliziumkarbids sind in der nachstehenden Tabelle angeführt.

Beispiel 10

Das Verfahren zur Herstellung von $\beta$-Siliziumkarbid erfolgt analog Beispiel 1, aber man verwendet dabei als Legierungskomponente ein Gemisch aus Ammoniumoxalat und -karbonat, das 10 Masse% Ammoniumoxalat enthält, in einer Menge von 0,55 Masse%, auf das hergestellte Gemisch wird Papier ( $\lambda$ = 1,0 x $10^{-4}$ cal/cm • s • Grad) bei einer Dichte des Gemisches von 0,85 g/$cm^3$ aufgetragen, und die selbstverbreitende Hochtemperatur-Synthese erfolgt unter einem Druck von 0,4 MPa, wobei man als Gasmedium ein Gemisch aus Stickstoff mit Kohlenstoffoxid verwendet, das 50 Vol.% Kohlenstoffoxid enthält.

Das hergestellte $\beta$-Siliziumkarbid, das mit Stickstoff und Sauerstoff legiert ist, hat eine spezifische Oberfläche von 8 $m^2$/g.

Die Ergebnisse der chemischen Analyse des hergestellten $\beta$-Siliziumkarbids sind in der nachstehenden Tabelle angeführt.

Beispiel 11

Das Verfahren zur Herstellung von $\beta$-Siliziumkarbid erfolgt analog Beispiel 1, aber man verwendet dabei als Legierungs/komponente ein Gemisch aus Ammoniumkarbonat und Karbamid, das 50 Masse% Karbamid enthält, in einer Menge von 0,55 Masse%, auf das hergestellte Gemisch wird Papier ( $\lambda$ = 2,0 x $10^{-4}$ cal/cm • s • Grad) bei einer Dichte des Gemisches von 1,0 g/$cm^3$ aufgetragen, und die selbstverbreitende Hochtemperatur-Synthese erfolgt unter einem Druck von 15,0 MPa, wobei man als Gasmedium ein Gemisch aus Stickstoff mit Kohlenstoffoxid verwendet, das 90 Vol.% Kohlenstoffoxid enthält.

Das hergestellte $\beta$-Siliziumkarbid, das mit Stickstoff und Sauerstoff legiert ist, hat eine spezifische Oberfläche von 6 $m^2$/g.

Die Ergebnisse der chemischen Analyse des hergestellten $\beta$-Siliziumkarbids sind in der nachstehenden Tabelle angeführt.

Tabelle

| | Chemische Zusammensetzung des $\beta$-Siliziumkarbids, Masse% | | |
|---|---|---|---|
| | freier Kohlenstoff | Sauerstoff | Stickstoff |
| Gemäss Beispiel 1 | 0,20 | 1,50 | 1,80 |
| Gemäss Beispiel 2 | 0,30 | 2,50 | 2,40 |
| Gemäss Beispiel 3 | 0,40 | 2,00 | 2,10 |
| Gemäss Beispiel 4 | 0,60 | 2,30 | 2,60 |
| Gemäss Beispiel 5 | 0,50 | 2,40 | 2,30 |
| Gemäss Beispiel 6 | 0,30 | 2,00 | 2,70 |
| Gemäss Beispiel 7 | 0,40 | 1,50 | 2,50 |
| Gemäss Beispiel 8 | 0,50 | 2,00 | 2,00 |
| Gemäss Beispiel 9 | 0,15 | 1,50 | 2,50 |
| Gemäss Beispiel 10 | 0,20 | 2,70 | 2,60 |
| Gemäss Beispiel 11 | 0,25 | 2,00 | 3,70 |
| Gemäss der bekannten Lösung US, A, 4117096 | 0,70 | von 0,5 bis 1,0 | 0,40 |

Industriemässige Verwertbarkeit

Die beanspruchte Erfindung kann für die Herstellung von Karborundum- Schleifmitteln, keramischen und feuerfesten Stoffen ihre Anwendung finden.

PATENTANSPRÜCHE

1. Verfahren zur Herstellung von $\beta$-Siliziumkarbid mittels Vermischung von pulverförmigem Silizium und Kohlenstoff mit anschliessender Wärmebehandlung des Gemisches in einem Gasmedium und Ausscheidung des Endproduktes, dadurch g e k e n n z e i c h n e t , dass man in das Gemisch des pulverförmigen Kohlenstoffs und Siliziums zusätzlich eine Legierungskomponente, die Stickstoff und Sauerstoff enthält, eine Temperatur der Zersetzung von 323 bis 423 K aufweist, in eine Menge von 0,5 bis 10,0 Masse% einführt, auf das hergestellte Gemisch einen Stoff mit einer Wärmeleitfähigkeit $(1-9) \times 10^{-4}$ cal/cm · s · Grad) bei einer Dichte des Gemisches von 0,80 bis 1,50 g/cm$^3$ aufträgt und die Wärmebehandlung der genannten Komponenten im Gasmedium unter Zuhilfenahme der selbstverbreitenden Hochtemperatur-Synthese unter Druck durchführt.

2. Verfahren nach Anspruch 1, dadurch g e k e n n - z e i c h n e t daß man als Stickstoff und Sauerstoff enthaltende Legierungskomponente mit einer der Zersetzungstemperatur von 323 bis 423 K Verbindungen verwendet, die aus der Gruppe: Ammoniumkarbonat, Karbamid, Ammoniumoxalat beziehungsweise ihre Gemische gewählt sind.

3. Verfahren nach Anspruch 1 oder 2, dadurch g e k e n n - z e i c h n e t , dass man als Gasmedium Stickstoff beziehungsweise sein Gemisch mit Kohlenstoffoxid oder Kohlenstoffdioxid verwendet.

4. Verfahren nach Anspruch 1 oder 2, dadurch g e k e n n - z e i c h n e t , dass man als Gasmedium ein Gemisch aus Stickstoff mit Kohlenstoffoxid verwendet, das von 20 bis 40 Vol.% Kohlenstoffoxid enthält.

5. Verfahren nach Anspruch 1 oder 2, dadurch g e k e n n - z e i c h n e t , dass man als Gasmedium ein Gemisch aus Stickstoff mit Kohlenstoffdioxid verwendet, das von 20 bis 40 Vol.% Kohlenstoffdioxid enthält.

6. Verfahren nach einem der Ansprüche 1 bis 5, d a d u r c h gekenn /z e i c h n e t , dass man als Stoff mit einer Wärmeleitfähigkeit von $(1-9) \times 10^{-4}$ cal/cm · s · Grad) einen der folgenden Stoffe verwendet: Asbest, Karton, Papier, Glimmer.

7. Verfahren nach einem der Ansprüche 1 bis 6, dadurch g e k e n n - z e i c h n e t , dass man die selbstverbreitende Hochtemperatur-Synthese unter einem Druck von 0,5 bis 10,0 MPa durchführt.

8. Verfahren nach einem der Ansprüche 1 bis 7, dadurch g e k e n n - z e i c h n e t , dass man das pulverförmige Silizium und den Kohlenstoff bei einem Molverhältnis von 1:0,8 bis 1:1,2 vermischt.

# INTERNATIONAL SEARCH REPORT

International Application No PCT/SU 88/00256

## I. CLASSIFICATION OF SUBJECT MATTER (if several classification symbols apply, indicate all) •

According to International Patent Classification (IPC) or to both National Classification and IPC

IPC$^4$    C 01 B 31/36

## II. FIELDS SEARCHED

Minimum Documentation Searched [7]

| Classification System | Classification Symbols |
|---|---|
| IPC$^4$ | C 01 B 31/36 |

Documentation Searched other than Minimum Documentation
to the Extent that such Documents are Included in the Fields Searched •

## III. DOCUMENTS CONSIDERED TO BE RELEVANT •

| Category • | Citation of Document, [11] with indication, where appropriate, of the relevant passages [12] | Relevant to Claim No. [13] |
|---|---|---|
| A | US, A, 4217335 (NIPPON CRUCIBLE CO., LTD.) 12 August 1980 (12.08.80), see the abstract, column 2, lines 32-51, column 4 , lines 1-10, claims 6 and 7 | 1,3,8 |
| A | US, A, 4226841 (TOKYO SHIBAURA DENKI KABUSHIKI KAISHA), 7 October 1980 (07.10.80), see the abstract, and table | 3 |
| A | GB, B, 1551665 (NIPPON CRUCIBLE CO., LTD.), 30 August 1979 (30.08.79) | 1,3,8 |
| A | FR, A1, 2362080 (NIPPON CRUCIBLE CO., LTD) 17 March 1978 (17.03.78), see page 1, lines 28-36, page 4, lines 30-38, page 6 , lines 28-36 | 1,3,8 |
| A | DE, A1, 2922280 (NIPPON CRUCIBLE CO., LTD) 11 December 1980 (11.12.80), see claims 6,7, page 12, lines 19-26, pages 15,16, example 2 ./. | 1,3,8 |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

## IV. CERTIFICATION

| Date of the Actual Completion of the International Search | Date of Mailing of this International Search Report |
|---|---|
| 28 April 1989 (28.04.89) | 5 May 1989 (05.05.89) |
| International Searching Authority | Signature of Authorized Officer |
| ISA/SU | |

Form PCT/ISA/210 (second sheet) (January 1985)

### III. DOCUMENTS CONSIDERED TO BE RELEVANT   (CONTINUED FROM THE SECOND SHEET)

| Category * | Citation of Document, with indication, where appropriate, of the relevant passages | Relevant to Claim No |
|---|---|---|
| A | GB, A, 2076385 (HIROSHIGE SUZUKI) 2 December 1980 (02.12.81), see the abstract, tables 1-3 | 3 |

--------